# EUROPÄISCHE PATENTSCHRIFT

(11) **EP 1 686 274 B1**
(45) Veröffentlichungstag und Bekanntmachung des Hinweises auf die Patenterteilung: **19.08.2009**
(21) Anmeldenummer: 05025740.1
(22) Anmeldetag: 25.11.2005
(51) Int. Cl.: F16C 33/12, F16C 33/14, F16C 33/62, F16C 33/64

(54) **Lager**
Bearing
Palier

(30) Priorität: 28.01.2005 DE 102005003986
(43) Veröffentlichungstag der Anmeldung: 02.08.2006
(73) Patentinhaber: Schaeffler KG, 91074 Herzogenaurach (DE)
(72) Erfinder: Grunau, Arbogast, Dr., 91085 Weisendorf (DE)

(56) Entgegenhaltungen:
- WO-A-02/26486
- WO-A-98/26190
- DE-A- 10 203 307
- GB-A- 650 593
- JP-A- 2005 024 046

## Beschreibung

### Gebiet der Erfindung

Die Erfindung betrifft ein Lager für rotierende oder lineare Bewegungen mit zwei radial zueinander beabstandeten und drehfest miteinander verbundenen Lagerschalen, wobei der gebildete Zwischenraum zwischen den beiden Lagerschalen von einem Schichtaufbau eingenommen ist.

### Hintergrund der Erfindung

Lager für rotierende oder lineare Bewegungen, wie Wälz- oder Gleitlager, sind bekanntermaßen zwischen einem bewegten und einem nicht bewegten Maschinenelement angeordnet. Hierbei ist es die Aufgabe der Lager, die Relativbewegung der Maschinenelemente zu ermöglichen und ferner die Relativposition derselben zueinander zu gewährleisten.

Soll beispielsweise eine Geräuschübertragung durch das Lager reduziert werden, so wird gemäß einer in der Praxis hinlänglich bekannten Maßnahme das Lager an die benachbarte tragende Konstruktion gedämpft derart angebunden, dass zur Dämpfung elastomere Werkstoffe Verwendung finden. Demnach wird die Dämpfung des Lagers durch eine gewisse Weichheit der Konstruktion erkauft, welche bei einigen Anwendungsfällen unerwünscht ist.

Vor diesem Hintergrund ist aus der DE 28 33 747 C2 ist ein sogenanntes geschichtetes Lager mit einer Vielzahl miteinander verbundener, abwechselnd aus einem elastomeren Material und aus einem im wesentlichen nicht dehnbaren Material bestehender Schichten bekannt, die entlang einer gemeinsamen, in Längsrichtung des Lagers sich erstreckenden Achse so angeordnet sind, dass das Lager senkrecht auf die Schichten beziehungsweise in Achsrichtung auf dieselben einwirkende Druckbelastungen sowie um die gemeinsame Achse ausgeübte Drehbewegungen aufnehmen kann. Dazu ist jede Schicht ringförmig ausgebildet und weist bezüglich der gemeinsamen Achse einen radial inneren und einen radial äußeren Umfang auf. Für den vorliegenden konkreten Anwendungsfall, nämlich die Lagerung eines Hubschrauber-Rotorblatts, mag diese relativ weiche Lagerausbildung vorteilhaft sein, da hier Belastungen in Achsrichtung und Torsionskräfte zu berücksichtigen sind. Für andere Lagerfälle ist dieser Aufbau eher ungeeignet.

Ein ähnliches Lager ist auch aus WO 98/26190 bekannt, welches durch mindestens einen in mindestens einem Ring enthaltenen viskoelastischen Schichtaufbau, der aus Schichten von axial beabstandeten Bandlagen besteht, gedämpft wird.

Des Weiteren offenbart die DE 197 01 178 C2 einen schwingungsgedämpften Lagerring mit einer inneren und einer äußeren Lagerschale, die mit radialem Abstand zueinander angeordnet sind und in deren so gebildeten Zwischenraum ein die beiden Lagerschalen drehfest verbindendes Element angeordnet ist. Dieses Element ist ein Drahtgestrick in Form eines maschenbildenden Gewirks, das als ein auf eine definierte Elastizität verdichteter begrenzt elastischer Formkörper ausgebildet und in den Zwischenraum zwischen den beiden Lagerschalen eingepresst ist.

JP 20055024046 offenbart ein weiteres durch ringförmige Bandlagen, in die ein metallischer Werkstoff eingelassen ist, gedämpftes Lager.

Derartige Lager finden überwiegend im Zusammenhang mit Kurbel- und Nockentrieben Anwendung, die mit einer Pleuelstange arbeiten und bei denen eine Rotationsbewegung in eine Translationsbewegung umgewandelt wird und umgekehrt, wobei Schwingungen, die bekanntermaßen zu störendem Luftschall führen, wirkungsvoll gemindert werden sollen. Auch hier handelt es sich um eine Konstruktion mit einer gewissen Weichheit, die sicherlich auch beabsichtigt ist.

Wird dagegen ein Lager für rotierende Bewegungen, wie beispielsweise ein Wälz- oder Gleitlager, mit einer hohen Steifigkeit gewünscht, sind die genannten technischen Lösungen nicht nutzbar.

Unter Berücksichtigung dessen ist aus der US 2,532,327 ein Lager bekannt, welches zwischen einer äußeren und einer inneren Lagerschale ein spiralförmig zu einem Coil gewickeltes Band aus einem inkompressiblen Material, vorliegend aus Stahl, aufweist. Durch diesen Aufbau wird zum einen eine hohe Steifigkeit des Lagers gewährleistet. Zum anderen sind Dämpfungsarten insbesondere in Form äußerer Dämpfung, nämlich Reibungs- und Fugendämpfung, und in Grenzen innere Dämpfung beziehungsweise Materialdämpfung zu verzeichnen. Dabei kommt unter Berücksichtigung der an sich bekannten Gesetzmäßigkeiten der Elastomechanik von festen Körpern dem Elastizitätsmodul E und der Querkontraktionszahl µ des verwendeten Werkstoffs besondere Bedeutung zu, da derartige Festkörper und demgemäss auch das vorliegende Band aus inkompressiblem Material/Werkstoff bei einer Belastung dennoch einer gewissen Verformung in Belastungsrichtung und quer zu derselben unterliegen. Hier setzt die nachfolgend beschriebene Erfindung an.

### Aufgabe der Erfindung

Ausgehend von der gattungsbildenden US 2,532,327 liegt somit der Erfindung die Aufgabe zugrunde, ein Linearlager bzw. ein Rotativlager zu schaffen, welches neben einer hohen Steifigkeit auch ein wirkungsvolleres Dämpfungsverhalten aufweist.

### Zusammenfassung der Erfindung

Der Erfindung liegt im Ergebnis umfangreicher Versuche die Erkenntnis zugrunde, dass im Hinblick auf den Stand der Technik bei Beibehaltung einer hohen Steifigkeit des Lagers sich weiter erhöhte Dämpfungswerte erzielen lassen, wenn weitestgehend inkompressible Schichten von Bandlagen wechselweise aus jeweils einem Werkstoff mit voneinander abweichendem Elastizitätsmodul E und/oder mit voneinander abweichender Querkontraktionszahl µ bestehen, wobei die Begriffe Werkstoffe und Materialien gleichbedeutend zu verstehen sind.

Die gestellte Aufgabe wird mit den Merkmalen des Hauptanspruchs sowie denen des Anspruchs 14 gelöst.

Die Unteransprüche beschreiben bevorzugte Weiterbildungen oder Ausgestaltungen der Erfindung.

Erfindungsgemäß bestehen die Bandlagen aus einem Eisen- oder Nichteisenmetall, einem Kunststoff, einem Verbundwerkstoff oder einem anderen lagertauglichen, jedoch weitestgehend inkompressiblen beziehungsweise weitgehend nicht dehnbaren Werkstoff.

Hierbei weisen eine oder mehrere Schichten des Schichtaufbaues eine Mehrzahl von axial nebeneinander angeordneten Bandlagen auf.

Des Weiteren kann vorgesehen sein, dass eine oder mehrere Schichten des Schichtaufbaus Bandlagen aufweisen, die sich über die gesamte axiale Lagerbreite erstrecken.

Ferner wurde im Rahmen der genannten Versuche herausgefunden, dass die axial nebeneinander angeordneten Bandlagen zueinander zu beabstanden sind.

Der Abstand s zwischen den axial nebeneinander angeordneten Bandlagen ist hierbei derart gewählt, dass sich die Bandlagen bei maximaler Querverformung beziehungsweise maximaler Verformung in axialer Richtung nicht berühren.

Wie die Erfindung außerdem vorsieht, weisen die Bandlagen vorzugsweise eine Materialdicke von etwa 5 µm bis etwa 1 mm auf.

Die axial nebeneinander angeordneten Bandlagen, weisen unter Beachtung der Beabstandung s zwischen den einzelnen Bandlagen vorzugsweise eine Breite von etwa 0,5 mm bis etwa einer halben Lagerbreite auf.

In Weiterbildung der Erfindung wird ferner vorgeschlagen, dass Werkstoffpaarungen der radial benachbarten Bandlagen gewählt sind, die zur Zielerreichung wirkungsvolle Reibwerte gewährleisten.

Ferner ist bevorzugt vorgesehen, dass die Reibwege der radial benachbarten Bandlagen so gering eingestellt sind, dass Verschleiß und/oder Passungsrost weitestgehend vermieden wird.

Wie die Erfindung noch vorsieht, können die Bandlagen mit einer den Reibwert und/oder das Verschleiß- und Korrosionsverhalten beeinflussenden Beschichtung versehen sein.

Als zweckmäßige Werkstoffpaarungen zweier radial benachbarter Bandlagen haben sich Gusseisen mit einer Querkontraktionszahl µ von etwa 0,1 bis etwa 0,2 und Stahl mit einer Querkontraktionszahl µ von etwa 0,3, sowie Aluminium mit einem Elastizitätsmodul E von etwa 70 GPa und Stahl mit einem Elastizitätsmodul E von etwa 210 GPa, jedoch gleicher Querkontraktionszahl µ von etwa 0,3 erwiesen.

Denkbar ist jedoch auch eine Werkstoffpaarung zweier radial benachbarter Bandlagen aus Verbundwerkstoff, bei dem in den beiden Koordinatenrichtungen senkrecht zur Kraftrichtung des Lagers die Querkontraktionszahl µ des Verbundwerkstoffes der beiden Bandlagen verschieden groß ist.

Schließlich kann es auch zweckmäßig sein, dass Werkstoffe mit relativ hoher innerer Dämpfung beziehungsweise Materialdämpfung gewählt sind. Hierfür bieten sich insbesondere austenitischer Stahl oder austenitisches Gusseisen an.

Mit den Merkmalen der Erfindung können besonders vorteilhaft Wälz- oder Gleitlager für rotierende oder lineare Bewegungen ausgebildet sein.

### Kurze Beschreibung der Zeichnungen

Die Erfindung wird im folgenden anhand der beiliegenden Zeichnung an einer Ausführungsform näher erläutert. Darin zeigt
- Fig. 1: eine Darstellung eines erfindungsgemäß ausgebildeten Wälzlagers für rotierende Bewegungen in einem Axialschnitt, und
- Fig. 2: die Einzelheit Z gemäß Fig.1.

### Detaillierte Beschreibung der Zeichnungen

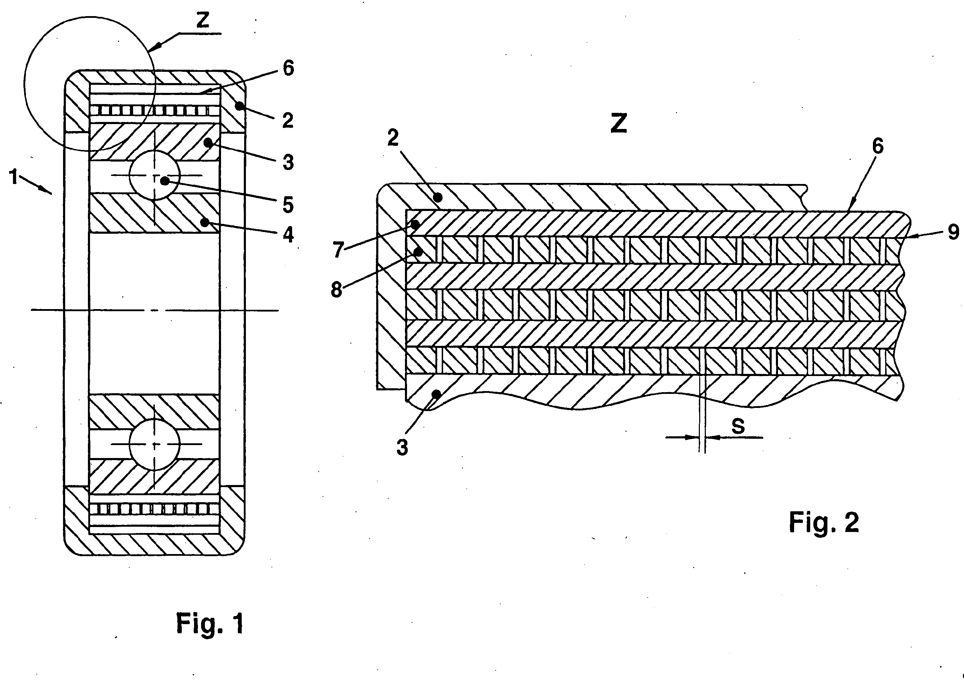

Das in Fig. 1 gezeigte Lager 1 für rotierende Bewegungen ist vorliegend als Radialrillenkugellager ausgebildet und umfasst im wesentlichen eine äußere Lagerschale 2 sowie eine innere Lagerschale 3, welche ihrerseits gleichzeitig als äußerer Lagerring fungiert.

Zwischen der inneren Lagerschale 3 beziehungsweise dem äußeren Lagerring des Lagers 1 und einem inneren Lagerring 4 sind bekanntermaßen eine Mehrzahl gleichmäßig über den Umfang des Lagers 1 verteilte Wälzkörper 5 angeordnet.

Die äußere Lagerschale 2 und die innere Lagerschale 3 sind des Weiteren radial zueinander beabstandet angeordnet sowie mittels an sich bekannter und demgemäss nicht näher zu erläuternder Maßnahmen drehfest miteinander verbunden. Eine radiale Beweglichkeit der beiden Lagerschalen 2, 3 zueinander muss nicht unbedingt gewährleistet sein. Die beiden Lagerschalen 2 und 3 bilden somit einen Zwischenraum zwischen sich aus, der seinerseits von einem sogenannten Schichtaufbau 6 aus noch zu beschreibenden Materiallagen eingenommen ist.

Gemäß Fig. 2 ist der besagte Schichtaufbau 6 erfindungsgemäß durch eine Mehrzahl von zylindrisch geformten und jeweils aus einem weitestgehend inkompressiblen Werkstoff bestehenden Bandlagen 7 und 8 gebildet, wobei die jeweils radial benachbarten Bandlagen 7 und 8 des Schichtaufbaues 6 aus einem Werkstoff mit voneinander abweichendem Elastizitätsmodul E und/oder mit voneinander abweichender Querkontraktionszahl µ bestehen.

Verwendet man demgemäss für die einzelnen geschichteten Bandlagen 7, 8 Werkstoffe mit unterschiedlichem Elastizitätsmodul E aber nahezu gleicher Querkontraktionszahl µ, oder Werkstoffe mit nahezu gleichem Elastizitätsmodul E jedoch unterschiedlicher Querkontraktionszahl µ, oder auch Werkstoffe, bei denen sich sowohl die Elastizitätsmodule E als auch die Querkontraktionszahlen µ hinreichend unterscheiden, so findet bei einer radialen Belastung des Lagers 1 und dementsprechend des Schichtaufbaues 6 sowie entsprechender Geometrie der einzelnen Schichten desselben eine Relativbewegung zwischen den einzelnen Bandlagen 7, 8 statt.

Aufgrund der Tatsache, dass der Schichtaufbau 6 im maßgeblichen Kraftfluss, vorliegend in einem Kraftfluss in radialer Richtung des Lagers 1 angeordnet ist, nimmt diese Relativbewegung unter Belastung bei Reibwerten größer Null Energie auf und erzeugt somit zunächst zwei Dämpfungseffekte, nämlich Reibdämpfung durch die Relativbewegung der Bandlagen 7, 8 parallel zur zwischen den radial benachbarten Bandlagen 7 und 8 gebildeten Fuge 9, sowie Fugendämpfung senkrecht zur Fuge 9.

Insoweit haben sich in Versuchen besonders gute Ergebnisse hinsichtlich einer Reib- und Fugendämpfung mit Werkstoffpaarungen zweier radial benachbarter Bandlagen 7, 8 aus Eisenmetallen, wie Gusseisen mit einer Querkontraktionszahl µ von etwa 0,1 bis etwa 0,2 und Stahl mit einer Querkontraktionszahl µ von etwa 0,3 erzielen lassen.

Als geeignet wird beispielsweise neben vielen anderen auch eine Werkstoffpaarung zweier radial benachbarter Bandlagen 7, 8 aus Aluminium mit einem Elastizitätsmodul E von etwa 70 GPa und Stahl mit einem Elastizitätsmodul E von etwa 210 GPa, jedoch nahezu gleicher Querkontraktionszahl µ von etwa 0,3 angesehen.

Eine weitere Verbesserung der vorstehenden Dämpfungseffekte ist des Weiteren dadurch erzielbar, dass Werkstoffe mit einer relativ hohen inneren Dämpfung beziehungsweise Materialdämpfung gewählt werden. Hierzu zählen insbesondere austenitischer Stahl und austenitisches Gusseisen.

Die Erfindung beschränkt sich jedoch nicht nur auf Werkstoffkombinationen aus Eisen- und Nichteisenmetallen, sondern schließt auch Kunststoffe, Verbundwerkstoffe und jegliche anderen lagertauglichen sowie weitestgehend inkompressiblen Werkstoffe mit ein.

So ist es beispielsweise denkbar, dass auch Verbundwerkstoffe, wie Faserverbundwerkstoffe zur Anwendung kommen können, deren Querkontraktionszahl µ in den beiden Koordinatenrichtungen senkrecht zur radial gerichteten Kraftrichtung des Lagers 1 verschieden ist.

Unterscheidet sich nämlich die Querkontraktionszahl µ einer Bandlage 7 in den beiden Koordinatenrichtungen senkrecht zur Kraftrichtung und liegt die radial benachbarte Bandlage 8 senkrecht in bezug auf die unterschiedliche Querkontraktionszahl µ der Bandlage 7, ist trotz Verwendung gleicher Werkstoffe bei Belastung die oben beschriebene Relativbewegung zwischen den Bandlagen 7, 8 zu verzeichnen, die ihrerseits zu einer Reibdämpfung führt.

Es versteht sich für den Fachmann in Kenntnis der Erfindung von selbst, dass Werkstoffpaarungen der radial benachbarten Bandlagen 7 und 8, welcher Art auch immer, gewählt sind, die wirkungsvolle Reibwerte gewährleisten.

Ferner sollte auch darauf geachtet werden, dass die Reibwege der radial benachbarten Bandlagen 7 und 8 so gering eingestellt sind, dass Verschleiß und/oder Passungsrost weitestgehend vermieden ist.

Insofern können dabei die Bandlagen 7 und 8 mit einer geeigneten sowie den Reibwert und/oder das Verschleiß- und Korrosionsverhalten beeinflussenden Beschichtung, beispielsweise einer Beschichtung aus Graphit oder aus einem in seinen Eigenschaften diamantähnlichem Material, versehen sein.

Im Ergebnis durchgeführter Berechnungen zu den genannten Versuchen wurde ferner gefunden, dass nur bei bestimmter Banddicke und Bandbreite Relativbewegungen zwischen den radial benachbarten Bandlagen 7, 8 Dämpfungseffekte zu verzeichnen sind. Bei davon abweichenden Banddicken und Bandbreiten wurde dagegen die gewünschte Relativbewegung durch die Reibung zwischen den Bandlagen 7, 8 behindert bzw. verhindert.

Demnach haben sich für die einzelnen Bandlagen 7 und 8 Materialdicken von etwa 5 µm bis etwa 1 mm bewährt, wobei gefunden wurde, dass mit steigender Anzahl der Schichten der Bandlagen 7, 8 auch eine Steigerung des Dämpfungseffektes zu verzeichnen ist.

Jedoch sind hinsichtlich der Dicke des Schichtaufbaues 6 und demgemäss der Anzahl der radial aufeinander geschichteten Bandlagen 7 und 8 allein schon durch die Lagerumgebung gewisse Grenzen gesetzt.

Gemäß Fig. 2 ist vorliegend ein Schichtaufbau 6 gewählt, der seinerseits aus in radialer Richtung wechselweise nacheinander angeordneten Schichten mit sich über die gesamte axiale Lagerbreite erstreckenden Bandlagen 7 und Schichten besteht, die durch eine Mehrzahl von axial nebeneinander angeordneten Bandlagen 8 gebildet sind. Auch durch diese Maßnahme lässt sich das Dämpfungsverhalten des Lagers 1 vorteilhaft auf bestimmte Werte abstimmen.

Sicherlich ist es auch möglich, einen von vorstehendem Schichtaufbau 6 abweichenden Schichtaufbau 6 zu wählen, beispielsweise derart, dass sämtliche Schichten Bandlagen 7 aufweisen, die sich ihrerseits über die gesamte axiae Breite des Lagers 1 erstrecken, oder aus einer Mehrzahl von axial nebeneinander angeordneten Bandlagen 8 bestehen.

Ebenso können zur Feinabstimmung des gewünschten Dämpfungsverhaltens auch die Bandbreiten und Banddicken innerhalb eines Schichtaufbaues 6 unterschiedlich gewählt sein.

Wie Fig. 2 weiter zu entnehmen ist, sind die axial nebeneinander angeordneten Bandlagen 8 einer Schicht zueinander beabstandet ausgebildet, wobei der Abstand s zwischen den Bandlagen 8 derart gewählt ist, dass sich dieselben bei maximaler Belastung und demgemäss Querverformung beziehungsweise Verformung in axialer Richtung nicht berühren.

Bei den besagten axial nebeneinander angeordneten Bandlagen 8 wurden unter Beachtung der Beabstandung s, die im µm-Bereich zu wählen ist, vorteilhaft Bandlagenbreiten von etwa 0,5 mm bis etwa einer halben Lagerbreite verbaut.

Vorstehendes Ausführungsbeispiel stellt auf an sich bekannte Radiallager, vorliegend ein Radialrillenkugellager ab. Jedoch können auch andere Wälzlager, wie beispielsweise Axiallager, Schräglager (Lager für radiale und axiale Belastungen), aber auch an sich bekannte Gleitlager erfindungsgemäß ausgebildet sein, um verbesserte Dämpfungseffekte an denselben zu erzielen.

Die Erfindung umfasst wie eingangs schon erwähnt auch erfindungsgemäß ausgebildete Linearlager, deren grundsätzlicher Aufbau dem Fachmann an sich bekannt und daher hier nicht zusätzlich graphisch dargestellt ist. Im wesentlichen besteht ein solches Linearlager beispielsweise aus der ebenen Abwicklung des in Fig. 1 dargestellten Rotativlagers.

### Bezugszeichen

- 1: Lager
- 2: äußere Lagerschale
- 3: innere Lagerschale / äußerer Lagerring
- 4: innerer Lagerring
- 5: Wälzkörper
- 6: Schichtaufbau
- 7: Bandlage
- 8: Bandlage
- 9: Fuge

## Patentansprüche

1. Lager (1) für rotierende oder lineare Bewegungen mit zwei radial zueinander beabstandeten und drehfest miteinander verbundenen Lagerschalen (2, 3), zwischen denen ein Zwischenraum gebildet ist, in dem ein Schichtaufbau (6) angeordnet ist, der durch eine Mehrzahl von zylindrisch geformten Bandlagen (7, 8) gebildet ist, wobei die jeweils radial benachbarten Bandlagen (7, 8) des Schichtaufbaus (6) aus jeweils einem Werkstoff mit voneinander abweichendem Elastizitätsmodul (E) und/oder mit voneinander abweichender Querkontraktionszahl (µ) bestehen, und wobei eine oder mehrere Schichten des Schichtaufbaues (6) eine Mehrzahl von axial nebeneinander angeordneten Bandlagen (8) aufweist, welche (8) unter einem solchen axialen Zwischenraum (s) zueinander angeordnet sind, dass sich dieselben bei maximaler Querverformung beziehungsweise maximaler Verformung in axialer Richtung nicht berühren, **dadurch gekennzeichnet, dass** die Bandlagen (7, 8) aus einem Eisen- oder Nichteisenmetall, einem Kunststoff, einem Verbundwerkstoff oder einem anderen lagertauglichen, weitestgehend inkompressiblen und weitgehend nicht dehnbaren Werkstoff bestehen.

2. Lager nach Anspruch 1, **dadurch gekennzeichnet, dass** sämtliche Schichten des Schichtaufbaues (6) aus einer Mehrzahl von axial nebeneinander angeordneten Bandlagen (8) bestehen.

3. Lager nach Anspruch 1 oder 2, **dadurch gekennzeichnet, dass** eine oder mehrere Schichten des Schichtaufbaues (6) Bandlagen (7, 8) aufweisen, die sich über die gesamte axiale Lagerbreite erstrecken.

4. Lager nach einem der Ansprüche 1 bis 3, **dadurch gekennzeichnet, dass** die Bandlagen (7, 8) eine Materialdicke von etwa 5 µm bis etwa 1 mm aufweisen.

5. Lager nach einem der Ansprüche 1 bis 4, **dadurch gekennzeichnet, dass** bei axial nebeneinander angeordneten Bandlagen (8) dieselben unter Beachtung des Zwischenraumes (s) zwischen den einzelnen Bandlagen (8) eine Breite von etwa 0,5 mm bis etwa einer halben Lagerbreite aufweisen.

6. Lager nach einem der Ansprüche 1 bis 5, **dadurch gekennzeichnet, dass** im Betrieb des Lagers die Reibwege, also die axiale Verschiebung von zwei radial benachbart angeordneten Bandlagen (7, 8), so gering eingestellt sind, dass Verschleiß und/oder Passungsrost weitgehend vermieden ist.

7. Lager nach einem der Ansprüche 1 bis 6**, dadurch gekennzeichnet, dass** die Bandlagen (7, 8) mit einer den Reibwert und/oder das Verschleiß- und Korrosionsverhalten beeinflussenden Beschichtung versehen sind.

8. Lager nach einem der Ansprüche 1 bis 7, **gekennzeichnet durch** eine Werkstoffpaarung zweier radial benachbarter Bandlagen (7, 8) aus Gusseisen mit einer Querkontraktionszahl (µ) von etwa 0,1 bis etwa 0,2 sowie Stahl mit einer Querkontraktionszahl (µ) von etwa 0,3.

9. Lager nach einem der Ansprüche 1 bis 8, **gekennzeichnet durch** eine Werkstoffpaarung zweier radial benachbarter Bandlagen (7, 8) aus Aluminium mit einem Elastizitätsmodul (E) von etwa 70 GPa sowie Stahl mit einem Elastizitätsmodul (E) von etwa 210 GPa jedoch gleicher Querkontraktionszahl (µ) von etwa 0,3.

10. Lager nach einem der Ansprüche 1 bis 9, **gekennzeichnet durch** eine Werkstoffpaarung zweier radial benachbarter Bandlagen (7, 8) aus Verbundwerkstoff, wobei in den beiden Koordinatenrichtungen senkrecht zur Kraftrichtung des Lagers (1) die Querkontraktionszahl (µ) des Verbundwerkstoffes der beiden Bandlagen (7, 8) verschieden ist.

11. Lager nach einem der Ansprüche 1 bis 10, **dadurch gekennzeichnet, dass** Werkstoffe mit relativ hoher innerer Dämpfung gewählt sind.

12. Lager nach Anspruch 11, **dadurch gekennzeichnet, dass** als Werkstoff mit der hohen inneren Dämpfung austenitischer Stahl oder austenitisches Gusseisen gewählt ist.

13. Lager nach einem der Ansprüche 1 bis 12, **dadurch gekennzeichnet, dass** dasselbe durch ein Wälz- oder ein Gleitlager gebildet ist.

14. Lager für lineare Bewegungen, **dadurch gekennzeichnet, dass** es einer ebenen Abwicklung eines Lager nach einem der vorstehenden Ansprüche entspricht.

## Claims

1. Bearing (1) for rotating or linear movements, with two bearing shells (2, 3) which are spaced radially apart from one another and are connected fixedly in terms of rotation to one another and between which is formed an interspace in which is arranged a layer build-up (6) which is formed by a plurality of cylindrically shaped band plies (7, 8), the band plies (7, 8) of the layer build-up (6) which are in each case radially adjacent consisting in each case of a material with a differing modulus of elasticity (E) and/or with a differing Poisson ratio (µ), and one or more layers of the layer build-up (6) having a plurality of band plies (8) which are arranged axially next to one another and which (8) are arranged with respect to one another with an axial interspace (s) such that these do not touch one another under maximum transverse deformation or maximum deformation in the axial direction, **characterized in that** the band plies (7, 8) consist of a ferrous or non-ferrous metal, a plastic, a composite material or another bearing-compatible, as far as possible incompressible and largely non-expandable material.

2. Bearing according to Claim 1, **characterized in that** all the layers of the layer build-up (6) consist of a plurality of band plies (8) arranged axially next to one another.

3. Bearing according to Claim 1 or 2, **characterized in that** one or more layers of the layer build-up (6) has or have band plies (7, 8) which extend over the entire axial bearing width.

4. Bearing according to one of Claims 1 to 3, **characterized in that** the band plies (7, 8) have a material thickness of about 5 µm to about 1 mm.

5. Bearing according to one of Claims 1 to 4, **characterized in that,** in the case of band plies (8) arranged axially next to one anther, these have a width of about 0.5 mm to about half a bearing width, at the same time ensuring the interspace (s) between the individual band plies (8).

6. Bearing according to one of Claims 1 to 5, **characterized in that**, when the bearing is in operation, the frictional travels, that is to say the axial displacement, of two band plies (7, 8) arranged radially adjacently are set so low that wear and/or fretting corrosion are/is largely avoided.

7. Bearing according to one of Claims 1 to 6, **characterized in that** the band plies (7, 8) are provided with a coating influencing the coefficient of friction and/or the wearing and corrosion behaviour.

8. Bearing according to one of Claims 1 to 7, **characterized by** a material pairing of two radially adjacent band plies (7, 8) made from cast iron with a Poisson ratio (µ) of about 0.1 to about 0.2 and made from steel with a Poisson ratio (µ) of about 0.3.

9. Bearing according to one of Claims 1 to 8, **characterized by** a material pairing of two radially adjacent band plies (7, 8) made from aluminium with a modulus of elasticity (E) of about 70 GPa and made from steel with a modulus of elasticity (E) of about 210 GPa, but with an identical Poisson ratio (µ) of about 0.3.

10. Bearing according to one of Claims 1 to 9, **characterized by** a material pairing of two radially adjacent band plies (7, 8) made from composite material, the Poisson ratio (µ) of the composite material of the two band plies (7, 8) being different in the two coordinate directions perpendicular to the direction of force of the bearing (1).

11. Bearing according to one of Claims 1 to 10, **characterized in that** materials with relatively high internal damping are selected.

12. Bearing according to Claim 11, **characterized in that** the selected material with the high internal damping is austenitic steel or austenitic cast iron.

13. Bearing according to one of Claims 1 to 12, **characterized in that** it is formed by a rolling or a plain bearing.

14. Bearing for linear movements, **characterized in that** it corresponds to a planar layout of a bearing according to one of the preceding claims.

## Revendications

1. Palier (1) pour mouvements rotatifs ou linéaires, comprenant deux coques de palier (2, 3) espacées radialement l'une de l'autre et connectées de manière solidaire en rotation l'une à l'autre, entre lesquelles est formé un espace intermédiaire dans lequel est disposée une structure en couches (6), qui est formée par une pluralité de couches de bandes (7, 8) de forme cylindrique, les couches de bandes (7, 8), à chaque fois espacées radialement, de la structure en couches (6) se composant d'un matériau ayant un module d'élasticité (E) différent selon les couches et/ou avec un indice de contraction transversale (µ) différent selon les couches, et une ou plusieurs couches de la structure en couches (6) présentant une pluralité de couches de bandes (8) disposées axialement les unes à côté des autres, qui sont disposées avec un tel espace intermédiaire axial (s) entre elles qu'elles ne se touchent pas même en cas de déformation transversale maximale ou de déformation maximale dans la direction axiale, **caractérisé en ce que** les couches de bandes (7, 8) se composent d'un métal ferreux ou non-ferreux, d'un plastique, d'un matériau composite ou d'un autre matériau stratifiable, substantiellement incompressible et sensiblement non étirable.

2. Palier selon la revendication 1, **caractérisé en ce que** toutes les couches de la structure en couches (6) se composent d'une pluralité de couches de bandes (8) disposées axialement les unes à côté des autres.

3. Palier selon la revendication 1 ou 2, **caractérisé en ce qu'**une ou plusieurs couches de la structure en couches (6) présentent des couches de bandes (7, 8) qui s'étendent sur toute la largeur axiale du palier.

4. Palier selon l'une quelconque des revendications 1 à 3, **caractérisé en ce que** les couches de bandes (7, 8) présentent une épaisseur de matériau d'environ 5 µm à environ 1 mm.

5. Palier selon l'une quelconque des revendications 1 à 4, **caractérisé en ce que** lorsque les couches de bandes (8) sont disposées axialement les unes à côté des autres, elles présentent, en tenant compte de l'espace intermédiaire (s) entre les couches de bandes (8) individuelles, une largeur d'environ 0,5 mm à environ une demi-largeur du palier.

6. Palier selon l'une quelconque des revendications 1 à 5, **caractérisé en ce que** pendant le fonctionnement du palier, les chemins de friction, c'est-à-dire le déplacement axial de deux couches de bandes (7, 8) disposées radialement l'une à côté de l'autre, sont ajustés de manière si faible que l'usure et/ou la corrosion de contact soient largement évitées.

7. Palier selon l'une quelconque des revendications 1 à 6, **caractérisé en ce que** les couches de bandes (7, 8) sont pourvues d'un revêtement influençant le coefficient de friction et/ou le comportement à l'usure et à la corrosion.

8. Palier selon l'une quelconque des revendications 1 à 7, **caractérisé par** un appariement de matériau de deux couches de bandes (7, 8) radialement adjacentes, de fonte, avec un indice de contraction transversale (µ) d'environ 0,1 à environ 0,2 et d'acier, avec un indice de contraction transversale (µ) d'environ 0,3.

9. Palier selon l'une quelconque des revendications 1 à 8, **caractérisé par** un appariement de matériau de deux couches de bandes (7, 8) radialement adjacentes, d'aluminium, ayant un module d'élasticité (E) d'environ 70 GPa et d'acier ayant un module d'élasticité (E) d'environ 210 GPa, mais un indice de contraction transversale (µ) identique d'environ 0,3.

10. Palier selon l'une quelconque des revendications 1 à 9, **caractérisé par** un appariement de matériau de deux couches de bandes (7, 8) radialement adjacentes, de matériau composite, l'indice de contraction transversale (µ) du matériau composite des deux couches de bandes (7, 8) étant différent dans les deux directions du système de coordonnées perpendiculairement à la direction d'application de force du palier (1).

11. Palier selon l'une quelconque des revendications 1 à 10, **caractérisé en ce que** les matériaux sont choisis avec un amortissement interne relativement élevé.

12. Palier selon la revendication 11, **caractérisé en ce que** l'on choisit comme matériau avec un amortissement interne élevé de l'acier austénitique ou de la fonte austénitique.

13. Palier selon l'une quelconque des revendications 1 à 12, **caractérisé en ce que** celui-ci est formé par un palier à roulement ou un palier lisse.

14. Palier pour mouvements linéaires, **caractérisé en ce qu'**il correspond à un déroulement plan d'un palier selon l'une quelconque des revendications précédentes.
